# EUROPÄISCHE PATENTSCHRIFT

(11) **EP 3 736 927 B1**
(45) Veröffentlichungstag und Bekanntmachung des Hinweises auf die Patenterteilung: **03.04.2024**
(21) Anmeldenummer: 20170739.5
(22) Anmeldetag: 21.04.2020
(51) Int. Cl.: H02G 1/00, H01B 13/00, H01R 43/00, H02G 1/12, H01R 43/28

(54) **ABLÄNGSTATION SOWIE VERFAHREN ZUM AUTOMATISCHEN ABLÄNGEN VON LEITUNGSELEMENTEN**
CUTTING STATION AND METHOD FOR AUTOMATICALLY CUTTING GUIDE ELEMENTS
STATION DE DÉCOUPE AINSI QUE PROCÉDÉ DE DÉCOUPE AUTOMATIQUE D'ÉLÉMENTS DE CONDUIT

(30) Priorität: 30.04.2019 DE 102019206243
(43) Veröffentlichungstag der Anmeldung: 11.11.2020
(73) Patentinhaber: LEONI Bordnetz-Systeme GmbH, 97318 Kitzingen (DE)
(72) Erfinder: ACHINGER, Markus, 86153 Augsburg (DE); DUTZ, Jessica, 86153 Augsburg (DE); SAULE, Johann, 86153 Augsburg (DE); NEDOBIJCZUK, Andreas, 86153 Augsburg (DE)
(74) Vertreter: FDST Patentanwälte

(56) Entgegenhaltungen:
- EP-A2- 0 137 631
- DE-A1- 19 844 416
- DE-A1-102017 206 139

## Beschreibung

Die Erfindung betrifft eine Ablängstation sowie ein Verfahren zum automatischen Ablängen von Leitungselementen insbesondere für eine automatisierte Herstellung eines Kabelsatzes, insbesondere für ein Kraftfahrzeug mit den Merkmalen des Oberbegriffs des Anspruchs 1.

Ein Kabelsatz weist allgemein eine Vielzahl von einzelnen Leitungselementen auf, die miteinander verbunden sind. Bei den Leitungselementen handelt es sich insbesondere um Adern. Unter "Ader" wird allgemein ein von einer Isolierung umgebener Leiter, entweder ein Leiterdraht oder ein Litzenleiter, verstanden.

Typischerweise werden für einen Kabelsatz unterschiedliche Leitungselemente, insbesondere unterschiedliche Adern eingesetzt, die sich beispielsweise im Hinblick auf ihren Leiter (Litzenleiter, Massivleiter), ihren Leiterdurchmesser oder im Hinblick auf ihre Isolierung (Adermantel) sowie insbesondere auch im Hinblick auf ihre Länge unterscheiden.

Aus der DE 10 2017 206 139 A1 ist eine Anlage sowie ein Verfahren zum automatisierten Herstellen eines Kabelsatzes beschrieben. Eine der ersten Stufen dieser Anlage ist eine Schneidstation, in der die einzelnen Leitungselemente auf eine vorgegebene Länge abgeschnitten werden. Die Leitungselemente sind dabei auf Spulen bereitgestellt. Mittels eines Transportsystems werden die vorbereiteten, abgeschnittenen Leitungsabschnitte dann zu einer nächsten Bearbeitungsstation, beispielsweise eine Crimpstation, weiter transportiert.

Aus der DE 198 44 416 A1 ist eine Vorrichtung zum automatischen Vorbereiten von Drähten zu Verarbeitung in einer Maschine zur Herstellung von Kabelbäumen mit den Merkmalen des Oberbegriffs des Anspruchs 1 zu entnehmen. Die Vorrichtung weist einen Drahtträger mit mehreren nebeneinander angeordneten Kanälen auf, in denen jeweils ein Draht gehalten ist. Vor dem Drahtträger sind mehrere Einheiten zum Bearbeiten eines jeweiligen Drahtes angeordnet. Die Drähte werden automatisch auf eine gewünschte Länge geschnitten, die beiden Drahtenden werden jeweils von einem Greifer gegriffen und zu einer Bearbeitungsstation weitertransportiert.

Aus der EP 0 137 631 A2 ist eine Vorrichtung zum automatischen Herstellen eines Kabels mit daran angecrimpten Kontaktelementen zu entnehmen. Bei dieser wird nach einem Ablängen des Kabels und einem Abisolieren der Enden des Kabels ein einem Kabelende ein Kontaktelement angecrimpt.

Ausgehend hiervon liegt der vorliegenden Erfindung die Aufgabe zugrunde, eine geeignete Schneid- oder Ablängstation zum automatischen Ablängen von Leitungselementen für eine derartige automatische Kabelsatzfertigung anzugeben.

Die Aufgabe wird gemäß der Erfindung gelöst durch eine Ablängstation zum automatischen Ablängen von Leitungselementen, wobei die Ablängstation hierzu ein Magazin aufweist, welches sich in einer Längsrichtung und einer Querrichtung erstreckt und mehrere Halter aufweist, wobei jeder Halter jeweils zum Halten eines Leitungselements vorgesehen ist. Die Leitungselemente sind durch die einzelnen Halter in einer Magazinebene nebeneinander gehalten, welche insbesondere horizontal verläuft. Weiterhin umfasst die Ablängstation einen sich in Längsrichtung erstreckenden Bearbeitungskopf. Der Bearbeitungskopf erstreckt sich also parallel zu den einzelnen, sich ebenfalls in Längsrichtung erstreckenden Haltern. Der Bearbeitungskopf ist in Querrichtung relativ zum ortsfesten Magazin verfahrbar. Der Bearbeitungskopf ist dabei insbesondere ausschließlich in Querrichtung relativ zum Magazin verfahrbar. Eine Bewegung in Längsrichtung ist nicht vorgesehen. Eine Förderung des jeweiligen Leitungselements in Längsrichtung erfolgt bevorzugt innerhalb des Bearbeitungskopfes. Der Bearbeitungskopf dient zum Bearbeiten, nämlich zum Greifen, Abziehen und Ablängen eines jeweils aktuell aus dem Magazin ausgewählten Leitungselements. Der Bearbeitungskopf ist oberhalb der Magazinebene angeordnet. Die Halter sind jeweils in einer Querrichtung nebeneinander angeordnet und jeder Halter erstreckt sich vorzugsweise von einem abspulseitigen hinteren Ende in Längsrichtung zu einem vorderen Ende. Jeder Halter weist zwei in Längsrichtung voneinander beabstandete Fixierelemente zum Halten des jeweiligen Leitungselements auf.

Die Leitungselemente werden typischerweise von Spulen bereitgestellt und abgerollt. Die Leitungselemente sind vorzugsweise von der Spule vom hinteren Ende des Halters bis zum vorderen Ende geführt. Am vorderen Ende wird vorzugsweise ein Endabschnitt des Leitungselements gehalten.

Durch das Magazin sind unterschiedliche Typen von Leitungselementen, speziell Adern, bereitgestellt. Im Betrieb wird mittels des Bearbeitungskopfes sukzessive ein jeweils benötigter Typ von Leitungselement ausgewählt, indem der Bearbeitungskopf in Querrichtung relativ zum Magazin verfährt, das gewünschte Leitungselement auswählt, dieses greift, anschließend von der Spule in Längsrichtung abspult und abzieht, bis die gewünschte Länge erreicht ist, und anschließend einen (vorderen) Leitungsabschnitt des von der Spule bereitgestellten Leitungselements abschneidet, sodass ein auf die gewünschte Länge abgelängter Leitungsabschnitt bereitgestellt ist, welcher dann weiter verarbeitet werden kann.

Durch die horizontale Ausrichtung des Magazins ist ein einfaches Anfahren des jeweils ausgewählten Leitungselements durch den Bearbeitungskopf problemlos ermöglicht. Auch erfordert das feststehende Magazin keine laterale Relativbewegung zwischen den einzelnen Haltern und den Spulen, von denen die einzelnen Leitungselemente abgespult werden. Die Halter und die Spulen sind daher bevorzugt auch ortsfest angeordnet.

In bevorzugter Ausgestaltung ist die Ablängstation dabei zum Anheben eines ausgewählten Halters zusammen mit dem darin gehaltenen Leitungselement in einer Vertikalrichtung (senkrecht zur Längsrichtung sowie senkrecht zur Querrichtung) aus der Magazinebene in eine Bearbeitungsebene ausgebildet. Hierzu ist insbesondere ein Hebeelement, wie beispielsweise ein (Pneumatik-)Hebezylinder vorgesehen. Der jeweilige ausgewählte Halter verfährt also individuell aus der Magazinebene heraus in die Bearbeitungsebene und wird in dieser vom Bearbeitungskopf gegriffen. Speziell ist der Bearbeitungskopf an seiner Unterseite mit geeigneten Aufnahme- und Führungselementen ausgebildet. Das Leitungselement wird also von unten an eine Unterseite des Bearbeitungskopfes herangeführt, dort gegriffen. Anschließend erfolgen die einzelnen Prozessschritte, die durch den Bearbeitungskopf ausgeführt werden, speziell das Abziehen und Ablängen.

Gemäß einer ersten Ausführungsvariante ist das Hebeelement an einem Träger angeordnet und verfährt den Halter in die Bearbeitungsebene.

In einer bevorzugten Ausgestaltung ist der Bearbeitungskopf selbst zum Greifen eines ausgewählten Halters sowie zum Anheben des Halters in die Bearbeitungsebene ausgebildet. Hierzu weist der Bearbeitungskopf selbst das Hebeelement auf.

Bevorzugt weist der Bearbeitungskopf zum Greifen des Halters zumindest ein Greifstück und der Halter zumindest ein hierzu komplementär ausgebildetes Mitnehmerelement auf. Zum Anheben greifen Greifstück und Mitnehmerelement ineinander ein. Speziell ist eine formschlüssige Verbindung zwischen diesen beiden Elementen vorgesehen. Beispielsweise ist das Greifstück oder das Mitnehmerelement als ein Profilelement ausgebildet, beispielsweise als C-Profilelement und das komplementär ausgebildete Gegenstück (Mitnehmerelement / Greifstück) weist einen verbreiterten Kopf auf, welcher in das C-Profil zur formschlüssigen Verbindung eingeführt wird. Im Halter sind beispielsweise zwei in Längsrichtung voneinander beabstandete Mitnehmerelemente ausgebildet und das Greifen des individuellen Halters erfolgt insbesondere dadurch, dass der Bearbeitungskopf in Querrichtung verfährt und dabei automatisch das Greifstück und das Mitnehmerelement die formschlüssige Verbindung ausbilden. Anschließend wird durch das Hebeelement, beispielsweise ein Pneumatikzylinder, der Halter in die Bearbeitungsebene angehoben.

Beim Anheben in die Bearbeitungsebene übernimmt der Bearbeitungskopf den Halter zusammen mit dem darin gehaltenen Leitungselement. Das Leitungselement wird anschließend von an der Unterseite des Bearbeitungskopfes angeordneten Führungselementen aufgenommen.

Für ein zuverlässiges Führen des Leitungselements am Bearbeitungskopf ist von Vorteil, wenn das jeweilige Leitungselement im Halter im gespannten Zustand vorgehalten wird. Entsprechend ist das Leitungselement auch zwischen den beiden Fixierelementen des Halters in einem derartig gespannten Zustand, also auf Zug gehalten.

In zweckdienlicher Ausgestaltung ist der Bearbeitungskopf allgemein zum Bearbeiten des ausgewählten Leitungselements ausgebildet, während dieses im Halter gehalten ist. Das Leitungselement bleibt daher im Halter angeordnet und der Bearbeitungskopf greift das weiterhin im Halter geführte Leitungselement. Beim Abziehen oder Abspulen des Leitungselements wird dieses daher weiterhin durch den Halter hindurchgeführt. Ein wiederholtes Ein- und Ausfädeln aus dem Halter ist daher nicht erforderlich.

Der Bearbeitungskopf weist vorzugsweise zumindest eine Abzugseinheit zum Ziehen des Leitungselements in Längsrichtung sowie eine Schneideinheit zum Abtrennen eines Leitungsabschnitts vom jeweils ausgewählten Leitungselement auf. Die zumindest eine Abzugseinheit nimmt dabei das Leitungselement zunächst auf, wobei das Leitungselement beispielsweise von unten in die Abzugseinheit einführbar ist. Die Abzugseinheit weist bevorzugt in Querrichtung gegenüberliegende Förderelemente, wie beispielsweise Rollen, Bänder, etc. auf. Diese werden - nachdem das Leitungselement in die Bearbeitungsebene angehoben wurde - durch Verstellelemente gegen das Leitungselement verfahren. Vorzugsweise ist der Anpressdruck der einzelnen Förderelemente gegen das Leitungselement einstellbar. Durch die relativ zur Position des Leitungselements verstellbaren Förderelemente und insbesondere auch durch die Einstellung des Anpressdrucks können daher problemlos Leitungselemente mit unterschiedlichen Durchmessern, unterschiedlichen Oberflächen-Beschaffenheiten etc. zuverlässig gefördert werden.

Vorzugsweise sind dabei zwei Abzugseinheiten vorgesehen, die in Längsrichtung voneinander beabstandet sind. Bevorzugt unterscheiden sich die beiden Abzugseinheiten im Hinblick auf ihre Antriebsleistung und Förderkraft, die auf das jeweilige Leitungselement übertragen wird. Speziell übt die hintere Abzugseinheit eine größere Förderkraft aus als die vordere Abzugseinheit. Die hintere Abzugseinheit ist dabei beispielsweise mit einem stärkeren Fördermotor ausgerüstet.

In bevorzugter Ausgestaltung weist der Bearbeitungskopf weiterhin ein Messelement zum Messen einer abgezogenen Länge des Leitungselements auf. Das Messelement ist insbesondere zwischen den beiden Abzugseinheiten angeordnet. Die beiden Abzugseinheiten sind im Hinblick auf ihre Fördergeschwindigkeit derart aufeinander abgestimmt, dass zwischen ihnen das Leitungselement auf Zug gehalten ist, sodass eine zuverlässige und genaue Messung der Länge ermöglicht ist. Wird die gewünschte Länge des abzulängenden Leitungsabschnitts erreicht, ergeht ein entsprechendes Signal an eine Steuerung und das Leitungselement wird auf die gewünschte Länge abgeschnitten.

Weiterhin weist der Bearbeitungskopf in bevorzugter Ausgestaltung speziell an seinem hinteren, abspulseitigen Ende eine Richteinheit zum Strecken oder Walken des Leitungselements auf. Durch diese Richteinheit werden beispielsweise durch die Lagerung entstandene Verformungen eliminiert.

Hierzu sind insbesondere gegenüberliegende Rollen vorgesehen, die im Querschnitt betrachtet einem V-förmigen Aufnahmebereich für das Leitungselement aufweisen. Diese V-Rollen werden vorzugsweise - ähnlich wie die Förderelemente der Abzugseinheiten - in Querrichtung aufeinander zu gestellt, nachdem das ausgewählte Leitungselement in die Bearbeitungsebene angehoben wurde. Sie werden beispielsweise wiederum durch eine einstellbare Kraft an das Leitungselement herangeführt.

In bevorzugter Ausgestaltung sind dabei mehrere, insbesondere zwei, Richteinheiten vorgesehen, die in Vertikalrichtung übereinander angeordnet sind. Sie unterscheiden sich speziell im Hinblick auf die Ausgestaltung ihrer V-Rollen, speziell im Hinblick auf die Breite des durch die V-Rollen bereitgestellten Aufnahmeraums für das Leitungselement. Hierdurch ist gewährleistet, dass Leitungselemente mit unterschiedlichen Leitungsquerschnitten sicher und zuverlässig aufgenommen werden können. Die beiden Richteinheiten sind vorzugsweise in Vertikalrichtung mit geeigneten Stellelementen, beispielsweise (Pneumatik-)Zylindern verfahrbar. Die Richteinheiten sind an der Unterseite des Bearbeitungskopfes angeordnet und daher relativ zu dieser Unterseite in Vertikalrichtung verstellbar.

In bevorzugter Ausgestaltung weist der Halter an seinem vorderen Ende eine insbesondere auswechselbar Düse zur Aufnahme eines vorderen Endabschnitts des jeweiligen Leitungselements auf. Das Leitungselement ist durch die Düse hindurchgeführt. Die Düse ist insbesondere mittels eines Schnellverschlusses, beispielsweise Bajonettverschluss oder auch einer sonstigen wechselbaren Befestigungsmöglichkeit, am Halter auswechselbar angeordnet. Der Durchmesser der Düse ist vorzugsweise an den Durchmesser des jeweiligen Leitungselements angepasst, sodass das Leitungselement zuverlässig konzentrisch durch die Düse hindurchgeführt wird. Für unterschiedliche Leitungselemente mit unterschiedlichen Durchmessern sind vorzugsweise unterschiedliche Düsen mit unterschiedlichen Düsenquerschnitten vorgesehen. Die Düse ist insbesondere am vorderen Ende des Halters angeordnet und definiert insofern einen Kabelaustritt des Leitungselements aus dem Halter.

In zweckdienlicher Weiterbildung weist die Düse ein Fenster, also eine seitliche Öffnung, für eine Bedruckung des Leitungselements auf. Speziell gibt das Fenster beispielsweise ein Druckmuster, wie beispielsweise eine Beschriftung, vor, sodass über dieses Druckmuster beispielsweise eine eindeutige Identifizierung des jeweiligen Typs des verwendeten Leitungselements erfolgt. Alternativ wird das gewünschte Druckmuster mittels einer geeigneten Ansteuerung eines Druckkopfes erreicht.

In weiterer zweckdienlicher Ausgestaltung weist der Bearbeitungskopf korrespondierend zur Düse eine Aufnahme auf, wobei die Aufnahme insbesondere zu einer Zentrierung der Düse ausgebildet ist und hierzu vorzugsweise zumindest ein Zentrierelement aufweist. Durch diese Maßnahme wird die Düse und damit das darin gehaltene Leitungselement definiert in Relation zum Bearbeitungskopf und speziell in Relation zu der am Bearbeitungskopf an einem vorderen Ende angebrachte Schneideinheit orientiert. Die Schneideinheit ist - wenn der Halter / das Leitungselement vom Bearbeitungskopf gegriffen ist - in Längsrichtung insbesondere unmittelbar nachfolgend zur Düse angeordnet. Das Leitungselement wird daher unmittelbar am Austritt der Düse abgetrennt. Bei dem Zentrierelement handelt es sich beispielsweise um einen Stell- / Pneumatikzylinder. Vorzugsweise sind zwei derartige Zentrierelemente vorgesehen, die einander gegenüberliegend (in Querrichtung betrachtet) angeordnet sind.

Weiterhin weist der Bearbeitungskopf zumindest einen Druckkopf zum Bedrucken des jeweiligen Leitungselements auf. Dieser Druckkopf ist dabei insbesondere an der Aufnahme für die Düse positioniert oder ist dort positionierbar. Vorzugsweise sind zwei Druckköpfe ausgebildet, die bevorzugt in Querrichtung einander gegenüberliegend angeordnet sind. Über die beiden Druckköpfe werden beispielsweise unterschiedliche Farben bereitgestellt. Allgemein sorgt die Düse insbesondere auch durch ihre Zentrierung dafür, dass das Leitungselement beim Bedrucken in exakter Position geführt ist, sodass das Bedrucken beispielsweise mittels eines Tintenstrahls, immer eine Mitte des Leitungselements trifft. Bevorzugt ist die Düse speziell, insbesondere asymmetrisch ausgebildet, sodass lediglich das Heranfahren einer der beiden Druckköpfe an die Fensterposition ermöglicht ist. Durch die Wahl der Düse ist daher vorgegeben, welcher der beiden Druckköpfe und damit beispielsweise welche Farbe verwendet wird. Je nach ausgewählter Düse und deren asymmetrischer Form wird daher ein Heranfahren eines der beiden Druccköpfe an das Druck-Fenster unterbunden.

Wie bereits zuvor erwähnt ist die Schneideinheit in bevorzugter Ausgestaltung in Längsrichtung nachfolgend zur Düse angeordnet. Weiterhin ist die Abzugseinheit, insbesondere die zweite, vordere Abzugseinheit, in Längsrichtung vorzugsweise unmittelbar vor der Düse bzw. vor der Aufnahme für die Düse angeordnet. Dadurch ist insgesamt gewährleistet, dass nach der vorderen Abzugseinheit lediglich nur noch eine möglichst kurze Wegstrecke bis zur Schneideinheit vorliegt.

In bevorzugter Weiterbildung weist die Ablängstation weiterhin eine Greifeinheit für das Leitungselement auf, welche in Längsrichtung nachfolgend zum Bearbeitungskopf angeordnet ist. Das Greifelement dient zum Greifen eines vorderen Endes des ausgewählten Leitungselements und zur Übergabe eines vom Bearbeitungskopf bereitgestellten Leitungsabschnittes an zumindest einen Greifer, insbesondere Transportgreifer. Die Greifeinheit ist insbesondere derart ausgebildet, dass das vordere Ende des Leitungsabschnitts, welches aus dem Bearbeitungskopf hervorsteht, gegriffen wird und dann dem Transportgreifer zugeführt und an diesen übergeben wird. Beim Transportgreifer handelt es sich insbesondere um einen Klemmgreifer, welcher das vordere Ende des Leitungsabschnitts klemmt.

Das Greifen des vorderen Endes durch die Greifeinheit und die Übergabe an den Transportgreifer erfolgt dabei typischerweise während des Abziehens des Leitungselements in Längsrichtung mittels der Abzugseinheiten des Bearbeitungskopfes. Das heißt die Greifeinheit oder der Transportgreifer hält also das vordere Ende des ausgewählten Leitungselements, wenn dieses von der Spule abgezogen und später durch die Schneideinheit abgetrennt wird. Die Greifeinheit ist vorzugsweise insgesamt verstellbar angeordnet, sodass sie das vordere Ende des Leitungselements zum Transportgreifer verfahren kann.

Insbesondere ist die Greifeinheit um eine Schwenkachse verschwenkbar und es sind weiterhin zwei Transportgreifer zur Aufnahme von zwei Enden des aus dem Bearbeitungskopf abgeschnittenen Leitungsabschnittes vorgesehen. Die Greifeinheit wird im Betrieb dabei derart verschwenkt, dass der Leitungsabschnitt unter Ausbildung einer Schlaufe von den Transportgreifern gehalten wird. Durch das Greifen des vorderen Endes des Leitungselements und der Drehung insbesondere um 180° wird das vordere Ende daher auch in Querrichtung versetzt zu dem ersten Transportgreifer überführt. Der zweite Transportgreifer ist bevorzugt vor dem Kabelaustritt, also vor der Düse des Halters bzw. vor der Schneideinheit platziert, sodass das rückwärtige, abgeschnittene Ende des Leitungselements im zweiten Transportgreifer aufgenommen wird. Durch das kontinuierliche Abziehen und Fördern bis zur gewünschten Leitungslänge bildet sich dadurch automatisch eine herabhängende Schlaufe aus.

Weiterhin weist die Ablängstation vorzugsweise ein Transportsystem auf, welches - in Längsrichtung betrachtet - vor dem Bearbeitungskopf und damit auch vor dem Magazin in Querrichtung verläuft und insbesondere zur Aufnahme und zum Weitertransport eines abgelängten Leitungsabschnitts ausgebildet ist. Die beiden Transportgreifer sind dabei vorzugsweise Teil des Transportsystems und werden im Betrieb in Querrichtung verfahren. Typischerweise sind dabei eine Vielzahl von Transportgreifern vorgesehen, die also sukzessive abgelängte Leitungsabschnitte aufnehmen und beispielsweise zu einer nachfolgenden Bearbeitungsstation verbringen.

Die Ablängstation weist weiterhin in bevorzugter Ausgestaltung eine Entdrilleinheit auf, die zum Entdrillen des abgelängten Leitungselements ausgebildet ist. Durch das Abwickeln des Leitungselements von einer Spule bildet sich typischerweise eine Verdrehung im Leitungselement selbst aus, welches zu einer Verdrillung des Leitungselements um seine Mittenachse führt. Die Entdrilleinheit weist zum Entdrillen vorzugsweise einen feststehenden Greifer sowie einen um eine Drehachse verdrehbaren Drehgreifer auf. Die beiden Greifer nehmen dabei jeweils ein Ende des abgelängten Leitungselements auf. Im Betrieb dreht sich der Drehgreifer mit dem Leitungselement um die Drehachse, sodass das eine Ende gegenüber dem anderen Ende wieder entdrillt wird. Der Drehgreifer wird dabei um einen vorgegebenen Drehwinkel verdreht. Dieser Drehwinkel wird jeweils individuell berechnet und hängt von der Länge des abgetrennten Leitungselements sowie auch von dem aktuellen Zustand der Spule ab, von der das Leitungselement abgewickelt wird.

Die Aufgabe wird gemäß der Erfindung weiterhin gelöst durch ein Verfahren zum automatischen Ablängen von Leitungselementen mithilfe der hier beschriebenen Ablängstation gemäß Anspruch 15.

Die im Hinblick auf die Ablängstation angeführten Vorteile und bevorzugten Ausgestaltungen sind sinngemäß auch auf das Verfahren zu übertragen.

Ein Ausführungsbeispiel einer Ablängstation ist in den Figuren dargestellt. Diese zeigen jeweils in teilweise stark vereinfachten Darstellungen:
- Fig. 1: eine Aufsicht auf eine Ablängstation mit einem Magazin und einem darüber angeordneten Bearbeitungskopf sowie einem Transportsystem,
- Fig. 2: eine ausschnittsweise Darstellung auf eine Front des Magazins mit Bearbeitungskopf,
- Fig. 3: eine Stirnansicht auf das Transportsystem mit Bearbeitungskopf,
- Fig. 4: eine Seitenansicht auf einen Halter,
- Fig. 5: eine Ansicht auf die Unterseite des Bearbeitungskopfes mit unterschiedlichen funktionellen Baugruppen.

In den Figuren sind gleich wirkende Teile jeweils mit den gleich wirkenden Bezugszeichen versehen.

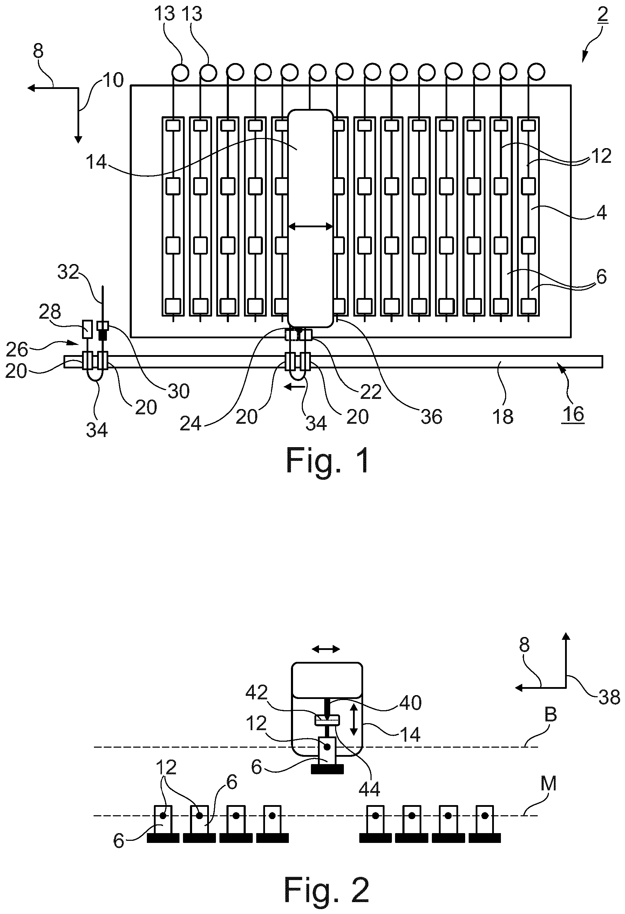

Die in der Fig. 1 dargestellte Ablängstation 2 umfasst ein horizontal angeordnetes Magazin 4 mit einer Vielzahl von einzelnen Haltern 6. Die einzelnen Halter 6 sind dabei in einer Querrichtung 8 nebeneinander angeordnet. Sie erstrecken sich jeweils in einer Längsrichtung 10 und nehmen jeweils ein Leitungselement 12 auf, welches sich ebenfalls in Längsrichtung 10 erstreckt. Die Querrichtung 8 und die Längsrichtung 10 spannen eine Horizontalebene auf. Die Leitungselemente 12 werden jeweils von Spulen 13 bereitgestellt, die hinter dem Magazin 4 angeordnet sind.

Oberhalb des Magazins 4 ist ein Bearbeitungskopf 14 angeordnet, welcher in Querrichtung 8 relativ zum Magazin 4 verfahrbar ist. Das Magazin 4 sowie der Bearbeitungskopf 14 sind beispielsweise in einem hier nicht näher dargestellten Traggestell oder Traggerüst angeordnet.

In Längsrichtung 10 betrachtet vor dem Magazin 4 und vor dem Bearbeitungskopf 14 ist weiterhin ein Transportsystem 16 angeordnet, welches eine in Querrichtung 8 verlaufende Fördereinrichtung 18 aufweist. Diese ist beispielsweise als ein Förderband oder eine Förderschiene ausgebildet. Weiterhin umfasst das Transportsystem 16 mehrere Transportgreifer 20, die entlang des Förderelements 18 verfahrbar sind.

Die Halter 6 dienen zur Aufnahme von unterschiedlichen Typen von Leitungselementen 12, d.h. die im Magazin 4 in den Haltern 6 bereitgestellten Leitungselemente 12 unterscheiden sich.

An einem in Längsrichtung 10 betrachtet vorderen Ende des Bearbeitungskopfes 14, also an dessen vorderer Stirnseite, ist eine Greifeinheit 22 angeordnet, welche um eine Schwenkachse 24 insbesondere um 180° verschwenkbar ist. Die verschwenkte Position der Greifeinheit 22 ist in der Fig. 1 gestrichelt dargestellt. Weiterhin weist die Ablängstation 2 eine Entdrilleinheit 26 auf, die beispielsweise in Querrichtung randseitig nachfolgend zum Magazin 4 angeordnet ist. Die Entdrilleinheit 26 weist dabei einen feststehenden Greifer 28 sowie einen Drehgreifer 30 auf. Dieser ist um eine Drehachse 32 verdrehbar.

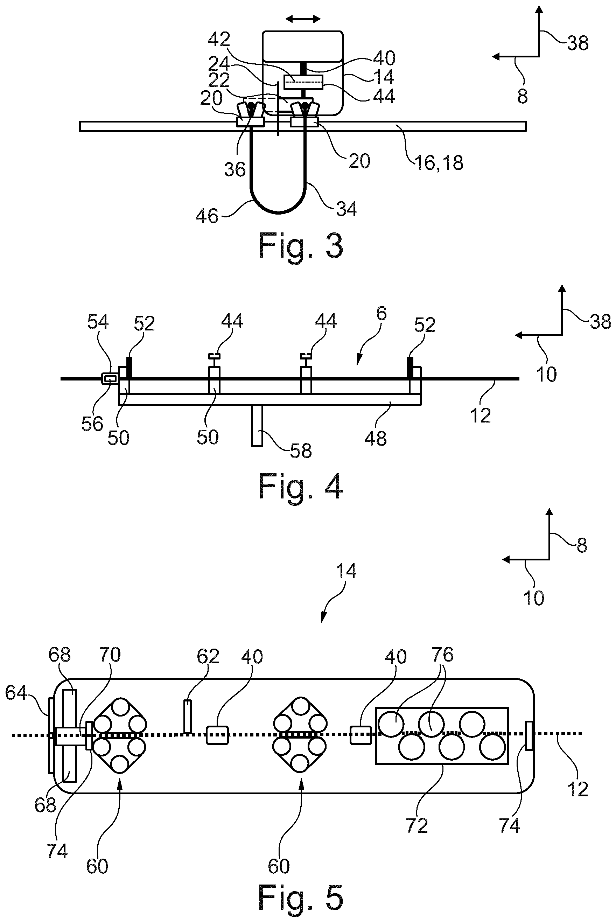

Der grundsätzliche Betrieb der Ablängstation 2 ist dabei wie folgt:
In einem ersten Schritt verfährt der Bearbeitungskopf 14 in Querrichtung 8 zu dem jeweiligen Halter 6, welcher den aktuell auszuwählenden Typ an Leitungselement 12 aufweist. Im nächsten Schritt wird der Halter 6 zusammen mit dem darin gehaltenen Leitungselement 12 aus einer Magazinebene M in eine Bearbeitungsebene B angehoben (vgl. hierzu Fig. 2). Dabei wird das weiterhin im Halter 6 gehaltene Leitungselement 12 von Funktions- und Bearbeitungseinheiten aufgenommen, die an der Unterseite des Bearbeitungskopfes 14 angeordnet sind (vgl. hierzu im Detail Fig. 5 mit zugehöriger Beschreibung). Mittels des Bearbeitungskopfes 14 wird das jeweilige Leitungselement 12 gegriffen, in Längsrichtung 10 von der zugeordneten Spule 13 abgerollt und auf eine vorgegebene Länge abgeschnitten, sodass ein abgelängter Leitungsabschnitt 34 bereitgestellt ist.

Während dieses Ablaufs wird ein vorderes Ende 36 des ausgewählten Leitungselements 12 von der Greifeinheit 22 gegriffen. Während des Abziehens des Leitungselements 12 verschwenkt die Greifeinheit 22 um die Schwenkachse 24 um 180° und übergibt das vordere Ende 36 an einen ersten Transportgreifer 20. Mittels des Bearbeitungskopfes 14 wird kontinuierlich das Leitungselement 12 in Längsrichtung 10 nachgefördert und zwar bis die gewünschte Länge erreicht ist. Ein hinteres Ende oder ein hinterer Endabschnitt des abzutrennenden Leitungsabschnittes 34 wird dann von dem zweiten Transportgreifer 20 gegriffen, bevor anschließend der Leitungsabschnitt 34 vom restlichen Leitungselement 12 abgetrennt wird, sodass der abgelängte Leitungsabschnitt 34 erhalten wird.

Der in den beiden Transportgreifern 20 gehaltene abgelängte Leitungsabschnitt 34 wird anschließend mittels des Transportsystems 16 weiter transportiert. Vorzugsweise zunächst zu der Entdrilleinheit 26, in der die beiden Enden des abgelängten Leitungsabschnitts 34 von dem feststehenden Greifer 28 und dem Drehgreifer 30 gegriffen werden. Durch Relativverdrehung mittels des Drehgreifers 30 um die Mittenlängsachse des abgelängten Leitungsabschnitts 34 erfolgt eine insbesondere softwaregesteuerte Entdrillung.

Nach dem Ablängen startet der Bearbeitungskopf 14 einen neuen Abläng-Zyklus. Sofern ein weiterer Leitungsabschnitt 34 des gerade im Bearbeitungskopf 14 befindlichen Leitungselements 12 benötigt ist, so wird das aktuell gehaltene Leitungselement 12 erneut abgelängt.

Falls ein anderer Typ an Leitungselement 12 benötigt wird, so setzt der Bearbeitungskopf 14 den ausgewählten Halter 6 zunächst wieder zurück in die Magazinebene M, verfährt zum nächsten, ausgewählten Typ an Leitungselement 12, hebt dessen Halter 6 in die Bearbeitungsebene B an und startet den Ablängvorgang wie zuvor beschrieben erneut.

Das Anheben aus der Magazinebene M in die Bearbeitungsebene B ist anhand der Fig. 2 näher illustriert: Zunächst ist hieraus zu entnehmen, dass die einzelnen Halter 6 nebeneinander angeordnet sind und jeweils ein Leitungselement 12 führen. Dazu weist ein jeweiliger Halter mehrere Führungselemente auf, beispielsweise vertikal abstehende Stege mit jeweils einer Durchführung, die beispielsweise nach Art eines einfachen Loches oder einer Öse ausgebildet ist und durch die das jeweilige Leitungselement 12 gefädelt ist. Die einzelnen Leitungselemente 12 befinden sich dabei innerhalb einer gemeinsamen Horizontalebene, die vorliegend als die Magazinebene M bezeichnet wird.

Aus dieser werden die Halter 6 in einer Vertikalrichtung 38 angehoben, sodass der ausgewählte Halter in eine oberhalb der Magazinebene M ausgebildete Bearbeitungsebene B angehoben wird. Zum Anheben ist an der Unterseite des Bearbeitungskopfes14 ein speziell als pneumatischer Hebezylinder ausgebildetes Hebeelement 40 angeordnet. Dieses weist endseitig ein Greifstück 42 auf, welches beispielsweise lediglich als verbreiterter Kopf (Pilzkopf) ausgebildet ist.

Korrespondierend hierzu ist am Halter 6 zumindest ein Mitnehmerelement 44 vorgesehen, das beispielsweise ein C-förmiges Profil ausbildet. Zwischen Greifstück 42 und Mitnehmerelement 44 wird beispielsweise durch ein Ineinander-Schieben eine formschlüssige Verbindung ausgebildet und anschließend wird der Halter 6 angehoben. Nach Durchführung des Abläng-Zyklusses wird dann der Halter 6 wieder zurück in die Magazinebene M abgesetzt.

Anhand der Fig. 3, die eine Vorderansicht auf das Transportsystem 16 mit dahinter liegendem Bearbeitungskopf 14 zeigt, ist nochmals die Übergabe des Leitungsabschnitts 34 an die beiden Transportgreifer 20 zu entnehmen. Zu erkennen ist wiederum die um die Schwenkachse 24 verschwenkbare Greifeinheit 22, die das vordere Ende 36 greift und durch Verschwenken um 180° dem ersten, linken Transportgreifer 20 übergibt. Durch das sukzessive Weiterfördern und Abziehen des Leitungselements 12 bildet sich eine Schlaufe 46 aus, die entgegen der Vertikalrichtung 38 nach unten hängt. Das zweite, rückwärtige Ende des Leitungsabschnitts 34 wird von dem zweiten, rechts dargestellten Transportgreifer 20 gegriffen. Anschließend wird der so von den Transportgreifern 20 gehaltene, abgelängte Leitungsabschnitt 34 weiter transportiert.

Der Aufbau eines jeweiligen Halters 6 ist aus der Fig. 4 zu entnehmen. Dieser weist einen Grundträger 48, beispielsweise eine Grundplatte auf. Auf dieser sind in Vertikalrichtung 38 abstehend mehrere, im Ausführungsbeispiel vier, Führungsstege 50 angeordnet, durch die jeweils das Leitungselement 12 hindurchgefädelt ist. Der Halter 6 weist weiterhin an seinem rückwärtigen sowie an seinem vorderen Ende jeweils ein Fixierelement 52 auf, mittels denen das Leitungselement 12 innerhalb des Halters geklemmt und auf Zug gehalten wird. Die Klemmung erfolgt beispielsweise durch ein vertikales Verschieben der Fixierelemente 52 relativ zu einem Klemmsitz.

Wie weiterhin anhand der Fig. 4 zu entnehmen ist, weisen die beiden mittig angeordneten Führungsstege 50 jeweils die Mitnehmerelemente 44 auf, die nach Art von C-Profilen ausgebildet sind und über die das Anheben des Halters 6 erfolgt.

Nachfolgend zu dem vordersten Führungssteg 50 ist noch eine Düse 54 angeordnet, welche ein Fenster 56 aufweist, über das eine Bedruckung des Leitungselements 12 erfolgen kann. Die Düse 54 ist dabei auswechselbar am Halter 6, speziell am vordersten Führungssteg 50, befestigt. Hierzu ist insbesondere ein Bajonettverschluss vorgesehen.

Weiterhin weist im Ausführungsbeispiel der Halter 6 noch einen Fuß 58 auf, mit dem er im Magazin M angeordnet wird.

Der Aufbau der einzelnen Funktions- und Bearbeitungselemente des Bearbeitungskopfes 14 wird nachfolgend anhand der Fig. 5 erläutert. Diese zeigt eine Aufsicht von unten auf eine Unterseite des Bearbeitungskopfes 14. Als wesentliche Funktions- und Bearbeitungseinheiten weist der Bearbeitungskopf 14 zwei Abzugseinheiten 60, ein Messelement 62, eine Schneideinheit 64 sowie zumindest ein, vorzugsweise zwei Hebeelement(e) 40 auf. In zweckdienlicher Weiterbildung ist weiterhin zumindest ein und sind vorzugsweise zwei Druckköpfe 68 sowie eine Aufnahme 70 für die Düse 54 angeordnet. Weiterhin ist zweckdienlicherweise eine Richteinheit 72 angeordnet und schließlich sind weiterhin vorzugsweise zwei Entriegelungselemente 74 angeordnet, die zum Entriegeln der Fixierelement 52 des Halters 6 und damit zur Freigabe des jeweiligen Leitungselements 12 ausgebildet sind. In der Fig. 5 ist der Verlauf des Leitungselements 12 durch eine strichpunktierte Linie dargestellt.

Wie zuvor beschrieben, wird der Halter 6 zusammen mit dem darin gehaltenen Leitungselement 12 unten an den Bearbeitungskopf 14 herangeführt. Dabei wird das Leitungselement 12 von den einzelnen Funktionseinheiten aufgenommen. Speziell wird das Leitungselement dabei zwischen den beiden Abzugseinheiten 60 in einen Mittenbereich der Richteinheit 72 eingeführt und die Düse 54 wird in der Aufnahme 70 aufgenommen. Anschließend wird das Leitungselement 12 quasi von den Abzugseinheiten 60 sowie auch von der Richteinheit 72 gegriffen, insbesondere bevor die Fixierelemente 52 über die Entriegelungselemente 74 gelöst werden. Der vorgespannte Zustand des Leitungselements 12 bleibt daher erhalten.

Nachdem der Halter 6 und das Leitungselement 12 in die Bearbeitungsebene B angehoben sind, wird die Düse 54 zunächst in der Aufnahme 70 mittels hier nicht näher dargestellten Zentrierelementen fixiert. Anschließend werden die beiden Abzugseinheiten 60 sowie die Richteinheit 72 und auch die Druckköpfe 68 zusammen gefahren und umfassen das Leitungselement 12. Dieses wird vorzugsweise zunächst ein kurzes Stück in Längsrichtung 10 gefördert, sodass das vordere Ende 36 von der Greifeinheit 22 gegriffen werden kann. Gleichzeitig beginnt das Messen der geförderten Länge. Während die Greifeinheit 22 verschwenkt wird, wird das Fördern des Leitungselements12 durch die Abzugseinheiten 60 kontinuierlich fortgesetzt und zwar bis die gewünschte Länge erreicht ist. Bis dahin hat die Greifeinheit 22 ihren Endpunkt nach 180° erreicht und hat bereits gestoppt bzw. das vordere Ende 36 an den Transportgreifer 20 übergeben.

Die Abzugseinheiten 60 sind jeweils zweigeteilt ausgebildet, wobei die beiden Teile in Querrichtung 8 gegenüberliegend angeordnet und aufeinander zu verfahrbar sind. Die Abzugseinheiten 60 weisen jeweils Förderelemente zum Abziehen des Leitungselements 12 von der jeweiligen Spule 13 auf. Die jeweiligen Förderelemente der Abzugseinheiten 60 sind mittels Stellelementen aufeinander zu verfahrbar. Vorzugsweise ist der Anpressdruck gegenüber dem Leitungselement 12 einstellbar.

Die Richteinheit 72 weist mehrere Rollen 76 auf, die als sogenannte V-Rollen ausgebildet sind, und welche abwechselnd gegenüberliegend zum Leitungselement 12 angeordnet sind und wiederum mittels hier nicht näher dargestellter Mittel in Querrichtung versetzbar sind. Auch hier ist vorzugsweise mittels Antriebsmittel der Anpressdruck einstellbar.

Vorzugsweise sind zwei hier nicht näher dargestellte Richteinheiten 72 angeordnet, die in Vertikalrichtung übereinander angeordnet sind und mittels Verstellelementen jeweils in die Bearbeitungsebene B verfahrbar sind. Die beiden Richteinheiten 72 unterscheiden sich im Hinblick auf ihre V-Rollen 76 und dienen zur Aufnahme von Leitungselementen 12 mit unterschiedlichen Leitungsquerschnitten.

Nach dem Greifen des Leitungselements 12 und dem Freigeben der Fixierelemente 52 wird das Leitungselement 12 mittels der Abzugseinheiten 60 in Längsrichtung 10 gefördert und dabei auf Zug gehalten. Das Messelement 62 ist zwischen den beiden Abzugseinheiten 60 angeordnet und misst die von der Spule abgezogene Weglänge des Leitungselements 12.

Mittels den Druckköpfen 68 erfolgt ein Bedrucken und Markieren des jeweiligen Leitungselements 12. Dies erfolgt beispielsweise fortlaufend oder auch lediglich in Endabschnitten des dann abgelängten Leitungsabschnitts 34.

Ist die gewünschte Länge erreicht, so stoppen die Abzugseinheiten 60 und mittels der Schneideinheit 64 wird das Leitungselement 12 abgetrennt, sodass der abgelängte Leitungsabschnitt 34 erhalten wird.

Die Entriegelungselemente 74 sind insbesondere nach Art eines Hebels ausgebildet, welcher ansteuerbar ist, beispielsweise über einen Pneumatikzylinder. Die Fixierelemente 52 sind beispielsweise als eine Kabelhalterung mit Federklemmung ausgebildet, wobei die Federklemmung mittels des Hebels des Entriegelungselements 74 gelöst wird, um das Leitungselement 12 frei zu geben.

Die Zustellbewegung der beiden Förderelemente (Abzugsbänder) der Abzugseinheiten geschieht dabei vorzugsweise kraftgeregelt. Hierzu ist insbesondere ein Proportionalventil des als Pneumatikzylinder ausgebildeten Verstellelements vorgesehen. Hierdurch wird für jedes Leistungselement 12 individuell eine passende Andruckkraft vorgegeben und festgelegt, um den Schlupf oder ein Quetschen des Leitungselements zu vermeiden. Zwischen den beiden Abzugseinheiten 60 ist das Leitungselement 12 auf Zug oder zumindest in gespanntem Zustand gehalten, um ein zuverlässiges Messen zu gewährleisten. Die Förderelemente der beiden Abzugseinheiten 60 werden dabei mittels geeigneter Antriebseinheiten, insbesondere Fördermotoren angetrieben. Die beiden Fördereinheiten sind insbesondere softwareseitig miteinander gekoppelt und kommunizieren untereinander, um ein optimales Fördern mit so wenig Kraft wie nötig zu gewährleisten. Die Antriebseinheit der vorderen Abzugseinheit 60 ist dabei vorzugsweise schwächer ausgelegt als eine Antriebseinheit der hinteren Abzugseinheit 60.

Innerhalb der Aufnahme 70 wird die Düse 54 mittels hier nicht näher dargestellter Zentrierelemente, beispielsweise (Pneumatik-)Zylinder, insbesondere durch Formschluss genau positioniert und auch während des Prozesses gehalten, um einen ruhigen und stabilen Austritt des Leitungselements aus der Düse 54 zu gewährleisten.

Die beiden Druckköpfe 68 sind vorzugsweise mechanisch mit den Abzugseinheiten 60 verbunden und werden passiv durch diese auf die Düse 54 aufgesetzt. Die Düse 54 ist dabei speziell ausgebildet, sodass lediglich einer der beiden Druccköpfe 68 aktiv sein kann. Je nach Düsenstellung wird daher einer der beiden Druckköpfe 68 ausgewählt, um beispielsweise unterschiedliche Farben auszuwählen. Die Druckköpfe 68 sind hierfür insbesondere federgelagert angeordnet, wobei je nach Position des Druckkopfes 68 dieser aktiviert wird oder nicht. Hierzu ist insbesondere ein entsprechender Sensor, speziell ein Näherungsschalter, vorgesehen, der also erkennt, ob der jeweilige Druckkopf 68 aktiv ist oder nicht. Der jeweils aktive Druckkopf 68 druckt dann durch das Fenster 56 auf das insbesondere (kontinuierlich) vorbeilaufende Leitungselement 12, also während dieses in Längsrichtung 10 gefördert wird.

Die Schneideinheit 64 selbst weist zum Schneiden vorzugsweise zwei gegenüberliegende Messer auf, die gesteuert zueinander verfahren, beispielsweise wiederum mittels Pneumatikzylinder.

Zum Verfahren des Bearbeitungskopfes 14 in Querrichtung ist ein geeigneter Antrieb, beispielsweise ein elektrischer Servoantrieb, vorgesehen.

### Bezugszeichenliste

- 2: Ablängstation
- 4: Magazin
- 6: Halter
- 8: Querrichtung
- 10: Längsrichtung
- 12: Leitungselement
- 13: Spule
- 14: Bearbeitungskopf
- 16: Transportsystem
- 18: Fördereinrichtung
- 20: Transportgreifer
- 22: Greifeinheit
- 24: Schwenkachse
- 26: Entdrilleinheit
- 28: feststehender Greifer
- 30: Drehgreifer
- 32: Drehachse
- 34: Leitungsabschnitt
- 36: vorderes Ende
- 38: Vertikalrichtung
- 40: Hebeelement
- 42: Greifstück
- 44: Mitnehmerelement
- 46: Schlaufe
- 48: Grundkörper
- 50: Führungssteg
- 52: Fixierelement
- 54: Düse
- 56: Fenster
- 58: Fuß
- 60: Abzugseinheit
- 62: Messelement
- 64: Schneideinheit
- 68: Druckkopf
- 70: Aufnahme
- 72: Richteinheit
- 74: Entriegelungselement
- 76: Rollen
- B: Bearbeitungsebene
- M: Magazinebene

## Patentansprüche

1. Ablängstation (2) zum automatischen Ablängen von Leitungselementen
- mit einem ortsfesten Magazin (4), welches sich in einer Längsrichtung (10) und einer Querrichtung (8) erstreckt und mehrere in Querrichtung nebeneinander angeordnete Halter (6) aufweist, wobei ein jeweiliger Halter zum Halten eines jeweiligen Leitungselements (12) ausgebildet ist und sich in Längsrichtung (10) erstreckt und die Leitungselemente (12) im Betrieb durch die Halter (6) in einer Magazinebene (M) nebeneinander gehalten sind sowie
- mit einem Bearbeitungskopf (14), wobei
- der Bearbeitungskopf (14) oberhalb der Magazinebene (M) angeordnet ist, sich in Längsrichtung (10) erstreckt und in Querrichtung (8) relativ zum ortsfesten Magazin (4) verfahrbar ist und zum Bearbeiten eines jeweils aktuell aus dem Magazin (4) ausgewählten Leitungselements (12) ausgebildet ist, nämlich zum Greifen eines jeweils ausgewählten Leitungselements (12), zum Abziehen eines jeweils ausgewählten Leitungselements (12) in Längsrichtung (10) und zum Ablängen eines jeweils ausgewählten Leitungselements (12), wobei
- jeder Halter (6) zwei in Längsrichtung (10) voneinander beabstandete Fixierelemente (52) zum Halten des Leitungselements (12) aufweist.

2. Ablängstation (2) nach Anspruch 1, die zum Anheben eines ausgewählten Halters (6) senkrecht zur Längsrichtung (10) aus der Magazinebene (M) in eine Bearbeitungsebene (B) ausgebildet ist und hierzu zumindest ein Hebeelement (40) aufweist, wobei insbesondere der Bearbeitungskopf (14) zum Greifen des ausgewählten Halters (6) sowie zum Anheben des Halters (6) in die Bearbeitungsebene (B) ausgebildet ist und hierzu das zumindest eine Hebeelement (40) aufweist.

3. Ablängstation (2) nach dem vorhergehenden Anspruch, bei der der Bearbeitungskopf (14) zum Greifen des Halters (6) zumindest ein Greifstück (42) und der Halter (6) zumindest ein hierzu komplementär ausgebildetes Mitnehmerelement (44) aufweisen, wobei Greifstück (42) und Mitnehmerelement (44) vorzugsweise zum formschlüssigen Ineinandergreifen ausgebildet sind.

4. Ablängstation (2) nach einem der vorhergehenden Ansprüche, bei der der Bearbeitungskopf (14) zum Bearbeiten des ausgewählten Leitungselements (12) ausgebildet ist, während dieses im Halter (6) gehalten ist.

5. Ablängstation (2) nach einem der vorhergehenden Ansprüche, bei der der Bearbeitungskopf (14) zumindest eine Abzugseinheit (60) zum Ziehen des Leitungselements (12) in Längsrichtung (10) sowie eine Schneideinheit (64) zum Abtrennen des Leitungselements (12) aufweist.

6. Ablängstation (2) nach dem vorhergehenden Anspruch, bei der zwei Abzugseinheiten (60) sowie ein Messelement (62) zum Messen einer abgezogenen Länge des Leitungselements (12) vorgesehen sind, wobei das Messelement (62) zwischen den beiden Abzugseinheiten (60) angeordnet ist.

7. Ablängstation (2) nach einem der beiden vorhergehenden Ansprüche, bei der der Halter (6) an seinem vorderen Ende (36) eine insbesondere auswechselbare Düse (54) zur Aufnahme eines vorderen Endabschnitts des jeweiligen Leitungselements (12) aufweist, wobei die Schneideinheit (64) in Längsrichtung (10) bevorzugt nachfolgend zur Düse (54) angeordnet ist.

8. Ablängstation (2) nach dem vorhergehenden Anspruch, bei der die Düse (54) ein Fenster (56) für eine Bedruckung des Leitungselements (12) aufweist.

9. Ablängstation (2) nach einem der vorhergehenden Ansprüche, bei der der Bearbeitungskopf (14) eine Aufnahme für eine am Halter (6) angeordnete Düse (54) aufweist, durch die das jeweilige Leitungselement (12) geführt ist, wobei die Aufnahme bevorzugt zumindest ein Zentrierelement aufweist

10. Ablängstation (2) nach dem vorhergehenden Anspruch, bei der der Bearbeitungskopf (14) zumindest einen Druckkopf (68) zum Bedrucken des jeweiligen Leitungselements (12) aufweist, welcher an der Aufnahme positioniert ist oder positionierbar ist.

11. Ablängstation (2) nach einem der vorhergehenden Ansprüche, bei der in Längsrichtung (10) nachfolgend zum Bearbeitungskopf (14) eine Greifeinheit (22) für das Leitungselement (12) angeordnet ist, welche zum Greifen eines vorderen Endes (36) des ausgewählten Leitungselements (12) und zur Übergabe eines Leitungsabschnittes (34) des Leitungselements (12) an zumindest einen Transportgreifer (20) ausgebildet ist.

12. Ablängstation (2) nach dem vorhergehenden Anspruch, bei der die Greifeinheit (22) um eine Schwenkachse (24) verschwenkbar ist und zwei Transportgreifer (20) zur Aufnahme von zwei Enden des Leitungsabschnittes (34) vorgesehen sind und die Greifeinheit (22) im Betrieb derart verschwenkt wird, dass der Leitungsabschnitt (34) unter Ausbildung einer Schlaufe (46) von den Transportgreifern (20) gehalten wird.

13. Ablängstation (2) nach einem der vorhergehenden Ansprüche, bei der ein Transportsystem (16) ausgebildet ist, welches vor dem Bearbeitungskopf (14) in Querrichtung (8) verläuft und zur Aufnahme und zum Weitertransport eines abgelängten Leitungsabschnitts (34) ausgebildet ist.

14. Ablängstation (2) nach einem der vorhergehenden Ansprüche, bei der eine Entdrilleinheit (26) vorgesehen ist, welche einen feststehenden Greifer (28) und einen um eine Drehachse (32) verdrehbaren Drehreifer (30) aufweist, wobei im Betrieb der Drehgreifer (30) eines der beiden Enden des abgelängten Leitungsabschnittes um einen vorgegebenen Drehwinkel verdreht.

15. Verfahren zum automatischen Ablängen von Leitungselementen (12) mithilfe einer Ablängstation (2) nach einem der vorhergehenden Ansprüche mit den Schritten
- Anordnen von Leitungselementen jeweils in einem Halter, wobei die Halter sich in einer Längsrichtung erstrecken und in einem Magazin in einer Querrichtung nebeneinander angeordnet sind
- Auswählen und Bearbeiten eines speziellen Leitungselements aus dem ortsfesten Magazin mit Hilfe eines Bearbeitungskopfes, wobei der Bearbeitungskopf hierzu relativ zum Magazin in Querrichtung verfährt, das ausgewählte Leitungselement greift, abzieht und ablängt,
- wobei jeder Halter das jeweilige Leitungselement mit Hilfe von zumindest zwei Fixierelementen hält.

## Claims

1. Cutting station (2) for automatically cutting to length of cable elements
- with a stationary magazine (4), which extends in a longitudinal direction (10) and a transverse direction (8) and has a plurality of holders (6) arranged next to each other, wherein a respective holder is formed to hold a respective cable element (12) and extends in the longitudinal direction (10), and the cable elements (12), during operation, are held side by side by the holders (6) in a magazine level (M), as well as
- with a processing head (14), wherein
the processing head (14) is arranged above the magazine level (M), extends in the longitudinal direction (10) and is displaceable in the transverse direction (8) relative to the stationary magazine (4) and is formed to process a respective cable element currently selected from the magazine (4), namely for gripping a respective selected cable element (12), pulling a respective selected cable element (12) in the longitudinal direction (10) and cutting to length of a respective selected cable element (12), wherein
- each holder (6) has two fixing elements (52) spaced apart from one another in the longitudinal direction (10) for holding the cable element (12).

2. Cutting station (2) according to claim 1, which is formed to lift a selected holder (6) perpendicular to the longitudinal direction (10) from the magazine level (M) into a processing level (B) and for this purpose has at least a lifting element (40), wherein in particular the processing head (14) is formed to grip the selected holder (6) as well as to lift the holder (6) into the processing level (B) and for this purpose has the at least a lifting element (40).

3. Cutting station (2) according to the preceding claim, wherein the processing head (14) has at least a gripping piece (42) for gripping the holder (6) and the holder (6) has at least a complementary formed driver element (44) thereto, wherein gripping piece (42) and driver element (44) are preferably formed for positive interlocking.

4. Cutting station (2) according to any one of the preceding claims, wherein the processing head (14) is formed to process the selected cable element (12) while this is held in the holder (6).

5. Cutting station (2) according to any one of the preceding claims, wherein the processing head (14) has at least a drawing unit (60) for pulling the cable element (12) in the longitudinal direction (10) as well as a cutting unit (64) for separating the cable element (12).

6. Cutting station (2) according to the preceding claim, wherein two drawing units (60) as well as a measuring element (62) for measuring a drawn length of the cable element (12) are provided, wherein the measuring element (62) is arranged between the two drawing units (60).

7. Cutting station (2) according to any one of both preceding claims, wherein the holder (6) has an, in particular replaceable, nozzle (54) at its front end (36) for receiving a front end section of the respective cable element (12), wherein the cutting unit (64) in the longitudinal direction (10) is preferably arranged downstream of the nozzle (54).

8. Cutting station (2) according to the preceding claim, wherein the nozzle (54) has a window (56) for printing on the cable element (12).

9. Cutting station (2) according to any one of the preceding claims, wherein the processing head (14) has a receptacle for a nozzle (54) arranged on the holder (6), through which the respective cable element (12) is guided, wherein the receptacle preferably has at least a centring element.

10. Cutting station (2) according to the preceding claim, wherein the processing head (14) has at least a print head (68) for printing on the respective cable element (12), which is positioned or can be positioned on the receptacle.

11. Cutting station (2) according to any one of the preceding claims, wherein a gripping unit (22) for the cable element (12) is arranged in the longitudinal direction (10) downstream of the processing head (14), which is used to grip a front end (36) of the selected cable element (12) and is formed to transfer a cable section (34) of the cable element (12) to at least a transport gripper (20).

12. Cutting station (2) according to the preceding claim, wherein the gripping unit (22) can be pivoted about a pivot axis (24) and two transport grippers (20) are provided for receiving two ends of the cable section (34) and the gripping unit (22), during operation, is pivoted such that the cable section (34) is held by the transport grippers (20), thereby forming a loop (46).

13. Cutting station (2) according to any one of the preceding claims, wherein a transport system (16) is formed, which runs in front of the processing head (14) in the transverse direction (8) and is formed to receive and further transport a cut-to-length cable section (34).

14. Cutting station (2) according to any one of the preceding claims, wherein a detwisting unit (26) is provided, which has a fixed gripper (28) and a rotary gripper (30) which can be rotated about an axis of rotation (32), wherein the rotary gripper (30), during operation, rotates one of both ends of the cut-to-length cable section by a predetermined angle of rotation.

15. Method for automatically cutting to length of cable elements (12) using a cutting station (2) according to any one of the preceding claims with the steps
- arranging cable elements each in a holder, wherein the holders extend in a longitudinal direction and are arranged side by side in a transverse direction in a magazine;
- selecting and processing a special cable element from the stationary magazine using a processing head, wherein the processing head is displaced in the transverse direction relative to the magazine, grips, pulls and cuts to length the selected cable element;
- wherein each holder holds the respective cable element using at least two fixing elements.

## Revendications

1. Station de découpe (2) destinée à la découpe automatique d'éléments conducteurs
- comportant un magasin fixe (4) qui s'étend dans une direction longitudinale (10) et une direction transversale (8) et comporte plusieurs organes de maintien (6) disposés les uns à côté des autres en direction transversale, un organe de maintien respectif étant configuré pour le maintien d'un élément conducteur (12) respectif et s'étendant en direction longitudinale (10) et les éléments conducteurs (12) étant, en fonctionnement, maintenus les uns à côté des autres dans un plan (M) du magasin par les organes de maintien (6) ainsi que
- comportant une tête de travail (14),
- la tête de travail (14) étant disposée au-dessus du plan (M) du magasin, s'étendant en direction longitudinale (10) et étant déplaçable en direction transversale (8) par rapport au magasin fixe (4) et étant configurée pour le travail d'un élément conducteur (12) chaque fois actuellement sélectionné depuis le magasin (4), à savoir pour la préhension d'un élément conducteur (12) chaque fois sélectionné, pour le tirage en direction longitudinale (10) d'un élément conducteur (12) chaque fois sélectionné et pour la découpe d'un élément conducteur (12) chaque fois sélectionné,
- chaque organe de maintien (6) comportant deux éléments de fixation (52) éloignés l'un de l'autre en direction longitudinale (10), destinés au maintien de l'élément conducteur (12).

2. Station de découpe (2) selon la revendication 1, qui est configurée pour le levage d'un organe de maintien (6) sélectionné, perpendiculairement à la direction longitudinale (10), depuis le plan (M) du magasin, dans un plan de travail (B) et comporte à cette fin au moins un élément de levage (40), en particulier la tête de travail (14) étant configurée pour la préhension de l'organe de maintien (6) sélectionné ainsi que pour le levage de l'organe de maintien (6) dans le plan de travail (B) et comportant à cette fin ledit au moins un élément de levage (40).

3. Station de découpe (2) selon la revendication précédente, dans laquelle la tête de travail (14) comporte pour la préhension de l'organe de maintien (6) au moins une pièce de préhension (42) et l'organe de maintien (6) comporte au moins un élément entraîneur (44) de configuration complémentaire à ce dernier, pièce de préhension (42) et élément entraîneur (44) étant configurés de préférence pour s'emboîter par complémentarité de forme.

4. Station de découpe (2) selon l'une quelconque des revendications précédentes, dans laquelle la tête de travail (14) est configurée pour le travail de l'élément conducteur (12) sélectionné, pendant que ce dernier est maintenu dans l'organe de maintien (6).

5. Station de découpe (2) selon l'une quelconque des revendications précédentes, dans laquelle la tête de travail (14) comporte au moins une unité de tirage (60) destinée au tirage de l'élément conducteur (12) en direction longitudinale (10) ainsi qu'une unité de coupe (64) destinée à la séparation de l'élément conducteur (12).

6. Station de découpe (2) selon la revendication précédente, dans laquelle sont prévu(e)s deux unités de tirage (60) ainsi qu'un élément de mesure (62) destiné à la mesure d'une longueur tirée de l'élément conducteur (12), l'élément de mesure (62) étant disposé entre les deux unités de tirage (60).

7. Station de découpe (2) selon l'une quelconque des deux revendications précédentes, dans laquelle l'organe de maintien (6) comporte à son extrémité antérieure (36) une buse (54) en particulier remplaçable, destinée à la réception d'un segment terminal antérieur de l'élément conducteur (12) respectif, l'unité de coupe (64) étant disposée de préférence à la suite, en direction longitudinale (10), de la buse (54).

8. Station de découpe (2) selon la revendication précédente, dans laquelle la buse (54) comporte une fenêtre (56) destinée à une impression de l'élément conducteur (12).

9. Station de découpe (2) selon l'une quelconque des revendications précédentes, dans laquelle la tête de travail (14) comporte un logement pour une buse (54) disposée au niveau de l'organe de maintien (6), à travers laquelle est passé l'élément conducteur (12) respectif, le logement comportant de préférence au moins un élément de centrage.

10. Station de découpe (2) selon la revendication précédente, dans laquelle la tête de travail (14) comporte au moins une tète d'impression (68) destinée à l'impression de l'élément conducteur (12) respectif, qui est positionnée ou est positionnable sur le logement.

11. Station de découpe (2) selon l'une quelconque des revendications précédentes, dans laquelle à la suite, en direction longitudinale (10), de la tête de travail (14) est disposée une unité de préhension (22) pour l'élément conducteur (12), qui est configurée pour la préhension d'une extrémité antérieure (36) de l'élément conducteur (12) sélectionné et pour le transfert d'un segment de conducteur (34) de l'élément conducteur (12) à au moins un préhenseur de transport (20).

12. Station de découpe (2) selon la revendication précédente, dans laquelle l'unité de préhension (22) est apte à pivoter autour d'un axe de pivotement (24) et deux préhenseurs de transport (20) sont prévus pour la réception des deux extrémités du segment de conducteur (34) et l'unité de préhension (22) est en fonctionnement pivotée de telle façon que le segment de conducteur (34) est maintenu par les préhenseurs de transport (20) avec formation d'une boucle (46).

13. Station de découpe (2) selon l'une quelconque des revendications précédentes, dans laquelle est formé un système de transport (16) qui en direction transversale (8) s'étend devant la tête de travail (14) et est conçu pour la réception et pour la poursuite du transport d'un segment de conducteur (34) coupé.

14. Station de découpe (2) selon l'une quelconque des revendications précédentes, dans laquelle est prévue une unité de détorsion (26) qui comporte un préhenseur fixe (28) et un préhenseur (30) pouvant tourner autour d'un axe de rotation (32), en fonctionnement le préhenseur rotatif (30) tordant d'un angle de torsion préétabli les deux extrémités du segment de conducteur coupé.

15. Procédé pour la découpe automatique d'éléments conducteurs à l'aide d'une station de découpe (2) selon l'une quelconque des revendications précédentes, comportant les étapes
- disposition d'éléments conducteurs chacun dans un organe de maintien, les organes de maintien s'étendant en une direction longitudinale et étant disposés les uns à côté des autres, dans une direction transversale, dans un magasin
- sélection et travail d'un élément conducteur particulier depuis le magasin fixe, à l'aide d'une tête de travail, la tête de travail qui saisit, tire et découpe l'élément conducteur sélectionné se déplaçant à cette fin en direction transversale par rapport au magasin,
- chaque organe de maintien maintenant l'élément conducteur respectif à l'aide d'au moins deux éléments de fixation.
